Europäisches Patentamt

European Patent Office

Office européen des brevets

(19)

(11) **EP 1 717 974 A2**

(12) **EUROPEAN PATENT APPLICATION**

(43) Date of publication:
**02.11.2006 Bulletin 2006/44**

(51) Int Cl.:
*H04H 1/00* (2006.01)

(21) Application number: **06008677.4**

(22) Date of filing: **26.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.04.2005 KR 20050034771**

(71) Applicant: **Samsung Electronics Co., Ltd.
Suwon-si, Gyeonggi-Do (KR)**

(72) Inventors:
 • **XU, Liling
 c/o Samsung Electronics Co.,Ltd.
 Suwon-si
 Gyeonggi-do (KR)**

 • **Song, Jae-Yeon
 c/o Samsung Electronics Co.,Ltd.
 Suwon-si
 Gyeonggi-do (KR)**
 • **Jung, Ki-Ho
 c/o Samsung Electronics Co.,Ltd.
 Suwon-si
 Gyeonggi-do (KR)**
 • **Wang, Ping,
 Yikwangkwaki Bldg., 4th floor
 Beijing (CN)**

(74) Representative: **Grünecker, Kinkeldey,
 Stockmair & Schwanhäusser
 Anwaltssozietät
 Maximilianstrasse 58
 80538 München (DE)**

(54) **Apparatus and method for transmitting and receiving broadcasting data in a digital multimedia broadcasting system**

(57)  An apparatus and method for transmitting and receiving broadcasting data in a DMB system are provided to reduce power consumption and implement smooth and seamless service handover. A frame group is configured so as to include information about services included in the frame group and information indicating the relative start times of the services.

FIG.1

EP 1 717 974 A2

**Description**

**BACKGROUND OF THE INVENTION**

1. Field of the Invention

The present invention relates generally to a Digital Multimedia Broadcasting (DMB) system, and in particular, to a DMB system using frame slicing.

2. Description of the Related Art

At present, digital broadcasting is being standardized locally based on a variety of technologies. For example, broadcasting standards under discussion in China include Digital Multimedia Broadcasting-Terrestrial (DMB-T), Advanced Digital Television Broadcasting-Terrestrial (ADTB-T), and Digital Video Broadcasting-Terrestrial (DVB-T).

DMB service is separated into DMB-T and satellite DMB (SDMB) according to transmission media. Europe deploys services in DMB-T, whereas SDMB prevails in the U.S. Multimedia service including mobile television service is scheduled to be launched for the first time in the world in Eastern Asia.

Although a DMB-T transmission system is suitable for fixed terminals or portable/mobile terminals, it has yet to made in a lightweight and less power-consuming manner for use in portable devices.

Compared to the terrestrial system, a portable system has the following main requirements.

(1) Power saving. A mobile handheld terminal requires gradually decreasing power consumption in Radio Frequency (RF) and baseband processing. Yet, an additional receiver must consume less on average in the mobile handheld terminal because battery capacity is limited and heat dissipation is difficult in a miniaturized device. Forthcoming advanced technology can save the power consumption requirement by up to 90% in the mobile handheld terminal.

(2) Smooth and seamless service handover. For mobile reception in a DMB-T Multi Frequency Network (MFN), if the reception quality of a current frequency is too low, handover to another frequency is needed. Because DMB-T does not support seamless handover, a frequency change causes service interruption. A receiver scans other available frequencies and selects the best frequency or a frequency offering a sufficient reception quality. To do so, the receiver has to be equipped with an additional RF end. Otherwise, interruption occurs at each frequency scanning. However, the use of the additional RF end increases the cost of the receiver. Accordingly, there exists a need for performing seamless handover and scanning for a frequency without using an additional RF end.

(3) RF performance for mobile single antenna reception. A Carrier-to-Noise Ratio (C/N) required for radio reception affects network cost significantly. In particular, the C/N ratio is an important factor that determines whether a service having a high Quality of Service (QoS) level can be received at a high rate.

While Europe has already developed DVB-Handheld (H) as the broadcasting standard for portable terminals, it has not addressed portable terminals working on ADTB-T. DMB-H is under standardization based on DMB-T.

DMB-H adopts time slicing to reduce average power consumption and realize smooth and seamless frequency handover.

Forward Error Correction (FEC) for Multi Protocol Encapsulated (MPE) data, known as MPE-FEC, which improves the C/N performance and Doppler performance, and FEC that improves tolerance against impulse interference are required for mobile channels. However, MPE-FEC is not mandatory for DVB-H.

Also, Transmission Parameter Signaling (TPS) is used to improve service discovery and increase data rate.

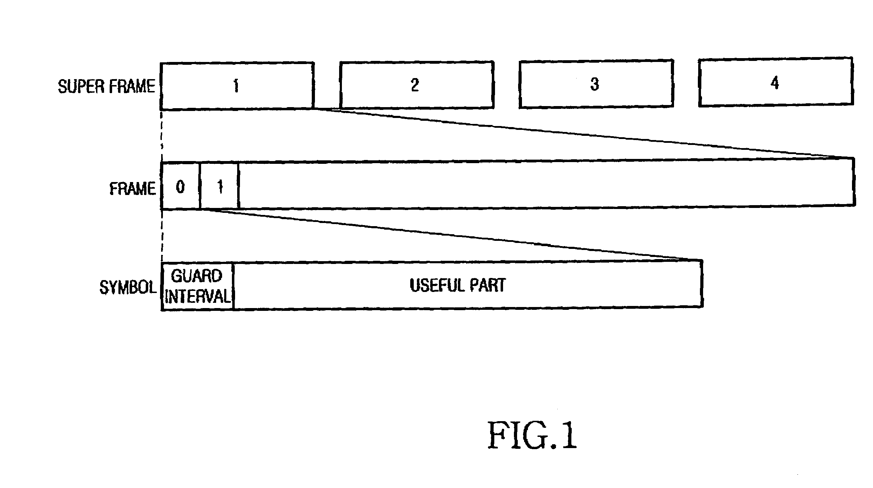

FIG. 1 illustrates the structure of a DVB-T frame.

An Orthogonal Frequency Division Multiplexing (OFDM) frame structure defined for DVB-H is identical to the DVB-T standard, except for the addition of a 4K mode, as illustrated in FIG. 1.

The 4K mode is optional, aimed at providing an additional degree of flexibility for DVB-H network planning. A DVB-H broadcasting signal is organized in frames and each frame includes 68 OFDM symbols in one transmission duration. Four frames form one super frame.

Each symbol is composed of two parts: a useful part with a predetermined duration $T_u$ and a guard interval $\Delta/T_u$ with a predetermined duration.

Table 1 below lists time domain parameters for 4K mode in 8MHz, 7MHz and 6MHz channels.

**Table 1**

| Time domain parameters for the 4K mode | 8MHz channel | | | | 7 MHz channel | | | | 6 MHz channel | | | |
|---|---|---|---|---|---|---|---|---|---|---|---|---|
| Useful symbol part $T_u$ | 4096T 48µs | | | | 4096T 512µs | | | | 4096T 597.333µs | | | |
| Guard interval part $\Delta/T_u$ | 1/4 | 1/8 | 1/16 | 1/32 | 1/4 | 1/8 | 1/16 | 1/32 | 1/4 | 1/8 | 1/16 | 1/32 |
| Guard interval duration $T_g$ | 1024T 112 µs | 512T 56 µs | 256T 28 µs | 128T 14 µs | 1024T 128 µs | 512T 64 µs | 256T 32 µs | 128T 106 µs | 1024T 149.3 µs | 512T 74.67 µs | 256T 37.33 µs | 128T 18.67 µs |
| Total symbol duration Ts=$\Delta+T_u$ | 5120T 560 µs | 4068T 504 µs | 4352T 476 µs | 4224T 462 µs | 5120T 640 µs | 4068T 576 µs | 4352T 544 µs | 4224T 528 µs | 5120T 746.67 µs | 4068T 672.00 µs | 4352T 634.67 µs | 4224T 616.00 µs |

Referring to Table 1, four values are available for the guard interval.

The symbols in an OFDM frame are numbered from 0 to 67. All symbols contain data and reference information. Since the OFDM signal comprises many separately modulated carriers, each symbol can in turn be considered to be divided into cells, each corresponding to the modulation symbol carried on one carrier during one symbol. In addition to the transmitted data, an OFDM frame contains scattered pilot cells, continual pilot carriers, and TPS carriers. The pilots can be used for frame synchronization, frequency synchronization, time synchronization, channel estimation, and transmission mode identification and can also be used to follow the phase noise.

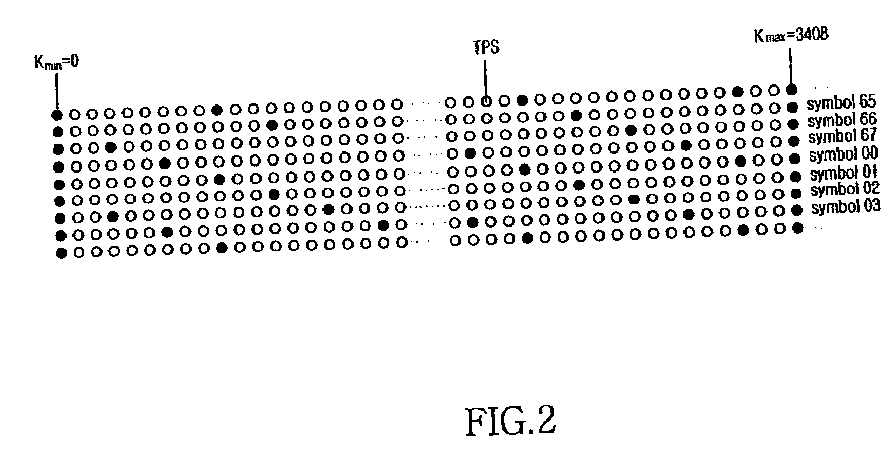

FIG. 2 illustrates a DVB-H frame for the 4K mode.

Referring to FIG. 2, in the 4K mode, the frequency index of the carriers $k \in [K_{min};K_{max}]$ where $K_{min}=0$ and $K_{max}=3408$ ($K_{max}= 1704$ for the 2K mode and $K_{max}=6816$ for the 8K mode).

Reference symbol • denotes boosted pilots and reference symbol o denotes data carriers. Continual pilots between $K_{min}$ and $K_{max}$ are not indicated. A TPS carrier shown in FIG. 2 is of K=3391.

TPS was defined for DVB-H for backward compatibility with DVB-T. In DVB-T, the TPS carriers are used for the purpose of signaling information required for the 4K mode, in-depth interleaver information, and additional information defined by higher layers. According to the DVB-H standard, the TPS is transmitted as follows.

Table 2 lists carrier indices for TPS carriers for the 4K mode.

**Table 2**

| 34 | 50 | 209 | 346 | 413 | 569 | 595 | 688 | 790 | 901 | 1073 | 1219 |
|------|------|------|------|------|------|------|------|------|------|------|------|
| 1262 | 1286 | 1469 | 1594 | 1687 | 1738 | 1754 | 1913 | 2050 | 2117 | 2273 | 2299 |
| 2392 | 2494 | 2605 | 2777 | 2923 | 2966 | 2990 | 3173 | 3298 | 3391 | | |

The TPS is transmitted in parallel on 34 TPS carriers for the 4K mode (on 17 TPS carriers for the 2K mode and on 68 TPS carriers for the 8K mode). The above carrier indices shown in Table 2 contain TPS carriers. Every TPS carrier in the same symbol conveys the same differentially encoded information bit. The TPS is defined over 68 consecutive OFDM symbols, referred to as one OFDM frame. Four consecutive frames correspond to one OFDM super frame. A reference sequence corresponding to the TPS carriers of the first symbol of each OFDM symbol are used to initialize the TPS modulation on each TPS carrier.

Each OFDM symbol conveys one TPS bit. Each TPS block corresponding to one OFDM frame contains 68 bits, defined as follows: 1 initialization bit, 16 synchronization bits, 37 information bits, and 14 redundancy bits for error protection.

Of the 37 information bits, 33 are used and the remaining 4 bits are reserved for future use, set to zero.

Transmission parameter information is transmitted as shown in Table 3 below.

Table 3

| Bit number | Purpose/Content |
|------------|-----------------|
| $s_0$ | Initialization |
| $s_1$ to $s_{16}$ | Synchronization word |
| $s_{17}$, to $s_{22}$ | Length indicator |
| $s_{23}$, $s_{24}$ | Frame number |
| $s_{25}$, $s_{26}$ | Constellation |

The left most bit is sent first. Bits $s_{48}$ and $s_{49}$ are used to indicate to receivers the transmission of DVB-H services in compliance with Table 4.

Table 4

| $S_{48}$ | $S_{49}$ | DVB-H signaling |
|----------|----------|-----------------|
| 0 | x | Time Slicing is not used |
| 1 | x | At least one Elementary Stream (ES) uses Time Slicing |
| x | 0 | MPE-FEC is not used |

(continued)

| S$_{48}$ | S$_{49}$ | DVB-H signaling |
|---|---|---|
| x | 1 | At least one ES uses MPE-FEC |

In the case of hierarchical transmission, the significance of bits s$_{48}$ and s$_{49}$ varies with the parity of the OFDM symbol transmitted, as follows.

When received during OFDM frame number 1 and 3 of each super frame, DVB-H signaling is interpreted as in relation with the High Priority (HP) stream in compliance with Table 4. When received during OFDM frame number 2 and 4 of each super frame, DVB-H signaling is interpreted as in relation with the Low Priority (LP) stream in compliance with Table 4.

In the case of non-hierarchical transmission, every frame in the super frame carries the same information, which is interpreted to be in compliance with Table 4.

Time slicing reduces the average power consumption of a receiving terminal and enables smooth, seamless frequency handover.

Services used in mobile handheld terminals require relatively low bit rates. The estimated maximum bit rate for streaming video using advanced compression technology like Moving Picture Experts Group-4 (MPEG-4) is in the order of a few hundred kilobits per second (Kbps), one practical limit being 384Kbps coming from the 3G standard. However, some other types of services, for example, file downloading, may require significantly higher bit rates. Therefore, there is a requirement for flexibility.

A DVB transmission system usually provides a bit rate of 10Mbps or more. This provides a possibility to significantly reduce the average power consumption of a DVB receiver by introducing a scheme based on Time Division Multiplexing (TDM). This scheme is called time slicing. The concept of time slicing is to send data in bursts using a significantly higher instantaneous rate compared to the bit rate required if the data was transmitted continuously. Within a burst, the time ($\Delta$t) to the beginning of the next burst is indicated.

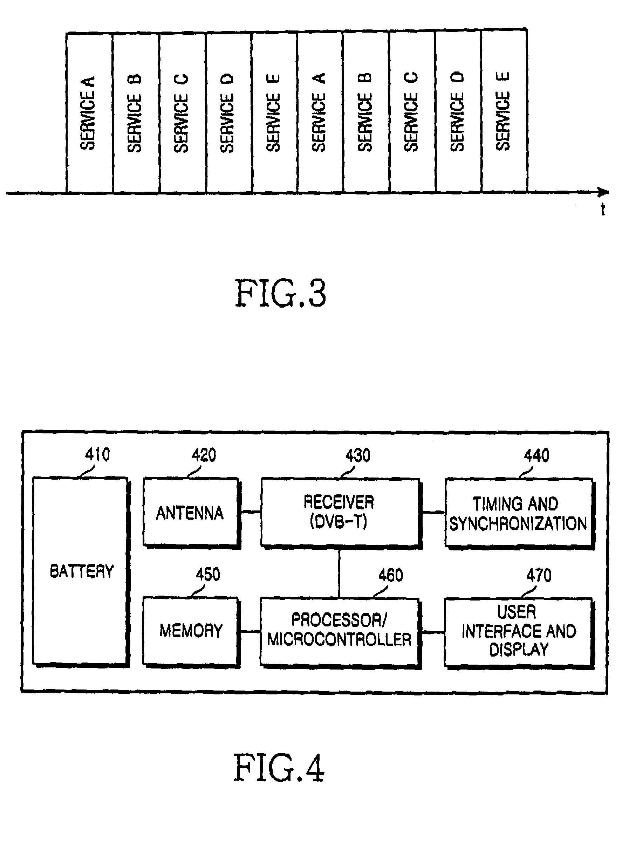

FIG. 3 illustrates time slicing. Between bursts, data of an ES is not transmitted, allowing other ESs to use the bit rate otherwise allocated, as illustrated in FIG. 3.

This enables a receiver to stay active for only a fraction of the time, while receiving bursts of a requested service. If a constant lower bit rate is required by the mobile terminal, this may be provided by buffering the received bursts.

To get a reasonable power saving effect, the burst bit rate should be at least 10 times the constant bit rate of the delivered service. In case of a 150Kbps streaming service, this indicates a requirement of 4Mbps bit rate for the bursts. If the burst bit rate is only twice the constant bit rate, this gives near to 50% power saving, which is still far from the required 90% mentioned before.

The power consumption depends on the duty cycle of the time slicing scheme. A 10% duty cycle is assumed herein, which implies a 90% decrease in power consumption.

The power consumption estimations take into account the duty cycle as well as the increase in power consumption due to the MPE-FEC. The results estimate about 2mW additional power consumption with 0.13 $\mu$m technology, and about 1mW using 0.18 $\mu$m technology for the MPE-FEC.

It should be pointed out these power consumption estimates assume that all Reed-Solomon (RS) codewords are always decoded. However, for most of the time in normal receiving conditions (particularly low speed reception), RS decoding will not be used, because the MPEG-2 Transport Stream (TS) is already fully correct and no MPE-FEC decoding will be necessary. Even in situations where the MPE-FEC is used, it may be used only for a subset of the received bursts. This leads to the conclusion that for a mixture of receiving conditions (probably typical to real user behavior) the MPE-FEC will consume the additional 2mW estimate only occasionally. The effect on battery time will therefore be negligible.

Time slicing supports the possibility of using the receiver to monitor neighboring cells during off-times. By accomplishing the switching between TSs during an off period, the reception of a service is seemingly uninterrupted.

With proper care, the bursts of a certain Internet Protocol (IP) stream can be synchronized between neighboring cells in such a way that the receiver can tune to the neighbor cell and continue receiving the IP stream without losing any data.

Time slicing aims to reduce power consumption in mobile terminals. Therefore, time slicing should be optimized from a terminal point of view. This selection also follows the DVB adopted rule of optimizing implementations on receivers, as their number is far higher than the number of transmitters. Also, the implementation cost on the network side is typically less critical compared to the terminal side.

FIG. 4 is a block diagram of a mobile handheld terminal. For purposes of terminology, an entity called a receiver is introduced. This entity is assumed to support some of the functionality on a traditional Integrated Recording Decoder (IRD), including especially Radio Frequency (RF), channel decoding and demultiplexing. Referring to FIG. 4, a receiver includes a battery 410 for providing power, antenna 420 for receiving a radio signal, a receiver 430 for demodulating and decoding the received radio signal from the antenna 420, a timing and synchronization unit 440 for providing the receiver 430 with timing and a synchronization signal of the radio signal, a memory 450 for storing program codes for the received signal data and a processor/micro controller 460, a user interface and display unit 470 for providing interface with a user and displaying the demodulated and decoded signal and the processor/micro controller 460 for controlling the operation of the receiver 430, the memory 450 and the user interface and display unit 470.

The receiver supports access to services delivered via DVB transmission to the mobile handheld terminal. Time slicing enables the receiver part to periodically switch off, through which power saving may be achieved.

The basic goal of a Δt method is to signal the time from the start of the MPE (or MPE-FEC) section, currently being received, to the start of the next burst within an ES. To keep Δt insensitive to any constant delays within the transmission path, Δt timing information is relative (e.g. "next burst within this ES will start 5500ms from the present time").

Within an MPE section header, a 6-byte field is allocated for a MAC address. The length of the MAC address is signaled in a data_broadcast_descriptor inserted in a Service Description Table (SDT) or an Event Information Table (EIT).

The minimum MAC address length is one byte, leaving up to five bytes for other uses. Four of these five bytes are allocated for delivering time slicing and MPE-FEC parameters in real time. This gives an additional benefit, as no additional bit rate is required for delivering these parameters. Transmitting the five bytes is mandatory regardless whether they are used for the MAC address or not.

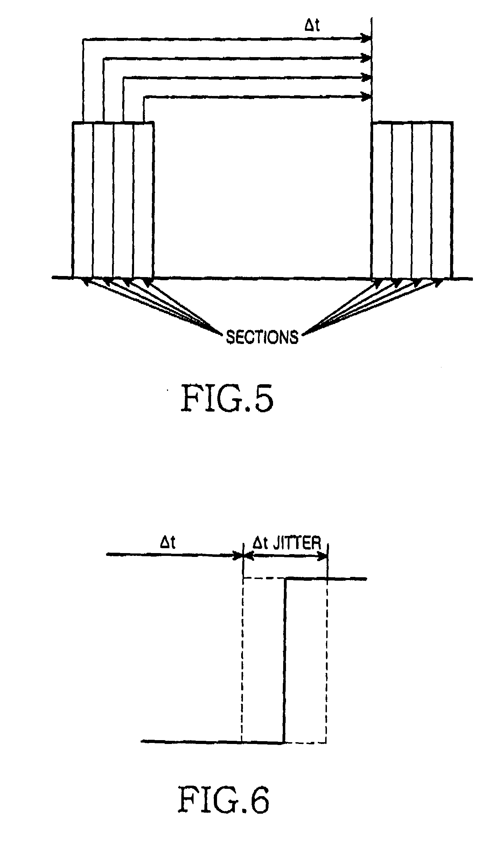

FIG. 5 illustrates MPE section headers each containing Δt indicating time to the beginning of the next burst.

As Δt indicates a relative time rather than an absolute one, the method is insensitive to any constant delays within the transmission path. However, jitter has an effect on the accuracy of Δt. This jitter is referred to as 'Δt jitter'. The receiver performs a jitter estimation in order to ensure that the wakeup time for the next burst is not mistakenly too late because of the current burst being delayed.

FIG. 6 illustrates the Δt jitter.

The size of a burst must be less than a memory size available in the receiver. When a burst is received, the receiver has to buffer the data within its memory, to be consumed during the time between bursts. It is assumed that the receiver can support a 2-Mbps memory for buffering an incoming burst. Streaming services may require even bigger buffering, even if time slicing is not used. It is to be noted that a receiver supporting reception of multiple time-sliced ESs simultaneously may need to support a 2-Mbps buffer for each time-sliced ES, unless the ESs use smaller burst sizes.

Burst size refers to the number of network layer bits within a burst. The network layer bits consist of section payload bits. Each MPE and MPE-FEC section contains a 16-byte overhead caused by the header and CRC(Cyclic Redundancy Check) of 32 bit. Assuming an average Internet Protocol (IP) datagram size of lkB, this indicates a 1.5% overhead. In addition, a transport packet header causes overhead, which depends on the length of a section. If the length of a section is lkB, the overhead is approximately 2.2%. It is assumed herein that a 4% overhead is caused by the section and transport packet headers.

Burst bit rate is the bit rate used by a time-sliced ES while transmitting a burst. Constant bit rate is the average bit rate required by the ES when time-slicing is not used. Both burst and constant bit rates include transmission of transport packets (188 bytes). For a burst size of 1Mb and a burst bit rate of 1Mbps, the burst duration (time from the beginning to the end of the burst) is 1.04 seconds due to the 4% overhead.

Off-time is the time between bursts. During off-time, transport packets are not delivered on a relevant ES.

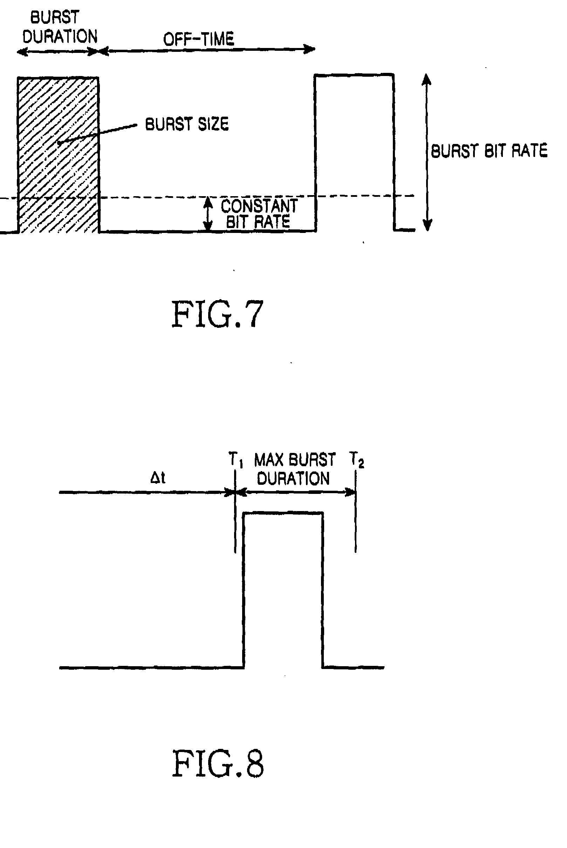

FIG. 7 illustrates burst parameters.

During on-time (i.e. while a burst is transmitted), transport packets of other ESs may also be transmitted. This occurs when the burst bit rate is less than the bit rate of the transport stream (i.e. the burst uses only a part of the bit rate available on the transport stream).

In this case, the transport packets of the time-sliced and non-time-sliced ESs are multiplexed together on a packet-by-packet basis. This ensures that traditional DVB-T receivers, which receive non-time-sliced services, are not locked out from reception during a time-slice burst.

Maximum burst duration is the maximum duration of a burst and is signaled for each time-sliced RS(Reed-Solomon) codeword. A burst does not start before T 1 and ends no later than T2, where T 1 is the time indicated by Δt on the previous burst and T2 is T1+ maximum burst duration. In poor reception conditions, the receiver may use this information to know when a burst has ended (time-out).

To enable the receiver to reliably distinguish bursts from each other, the next burst does not start before T2 of the current burst (i.e. Δt is signaled beyond T2). Distinction between bursts in a reliable way is required especially when MPE-FEC is used. It is to be noted that this parameter can also be used to support Δt jitter up to a number of seconds.

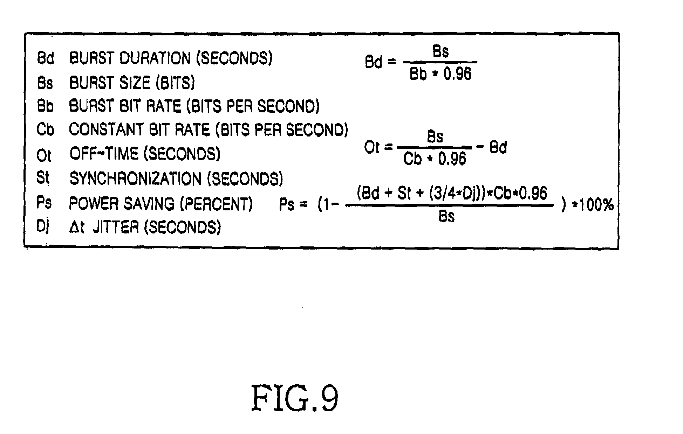

FIG. 8 illustrates maximum burst duration, and FIG. 9 illustrates some formulas to calculate the length of a burst, off-time and the achieved saving on power consumption.

A correction factor 0.96 compensates for the overhead caused by transport packets and section headers. The formulas shown in FIG. 9 are provided for explanatory purposes only.

If the burst size is 2Mb over MPE and MPE-FEC section payloads and the burst bit rate is 15Mbps over related transport packets, the maximum burst duration is 140ms from the beginning of the first transport packet to the end of the last one.

If an ES carries one streaming service at a constant bit rate of 350Kbps, and MPE-FEC is not supported, the average off-time is 6.10s. Assuming a synchronization time of 250ms and a Δt jitter of 10ms, a 93% saving on power consumption may be achieved. The Δt jitter has only a small effect on the power saving, as changing the value from 0 to 100ms decreases the achieved power saving only from 94% to 92%.

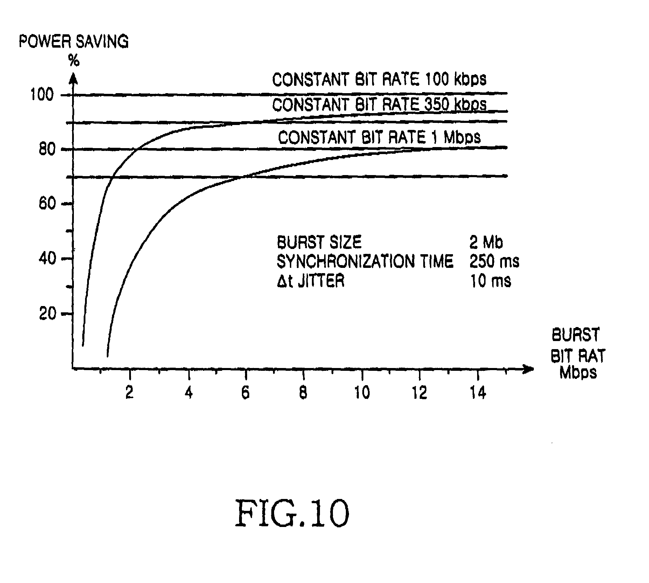

FIG. 10 illustrates how the burst bit rate increasing up to approximately 10 times the constant bit rate increases the achieved power saving.

Referring to FIG. 10, for a constant bit rate of 350Kbps, increasing the burst bit rate from 1Mbps to 2Mbps increases the power saving from 60% to 78% (i.e. 30%). However, similar doubling on burst bit rate from 7Mbps to 14Mbps gives less than 3% benefit on power saving (91% to 93%).

The fundamental technology of the DVB-T system is Time Domain Synchronization-Orthogonal Frequency Division Multiplexing (TDS-OFDM) modulation of mQAM/QPSK (m Quadrature Amplitude Modulation/Quadrature Phase Shift Keying). The spectral efficiency of this system can be increased up to 4bits/s/Hz.

Meanwhile, the above-described time slicing scheme for the DVB-H system has several problems, which will be described below.

FIG. 13 illustrates a conventional service information search based on time slicing. To search for service R, all services ranging from A to Q must be scanned. During the service search, power must be kept on, thereby increasing power consumption.

FIG. 14 illustrates a conventional service switching based on time slicing.

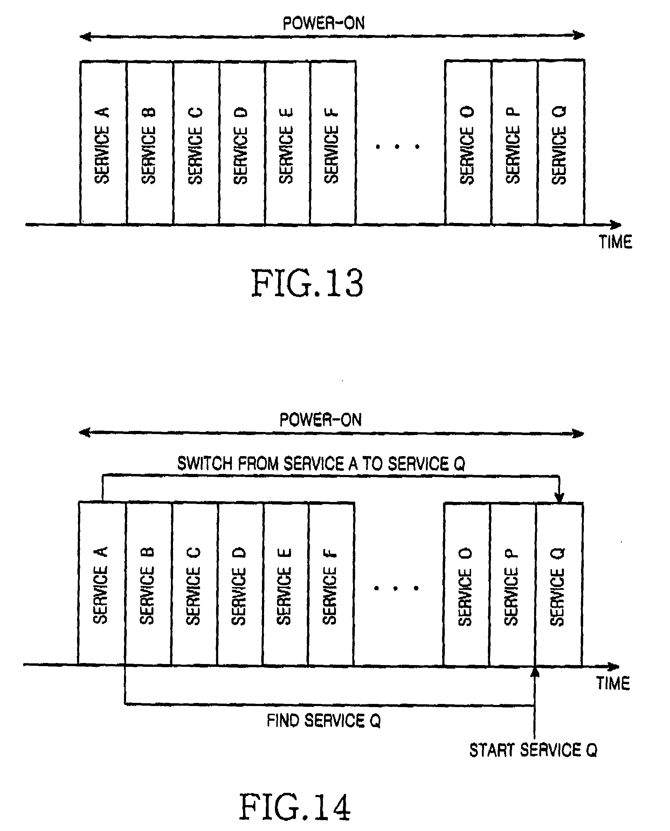

Referring to FIG. 14, when switching from service A to service Q, the terminal must scan all services from service B to service P until finding service Q. During the scanning, the terminal must be power-on, thereby increasing power consumption.

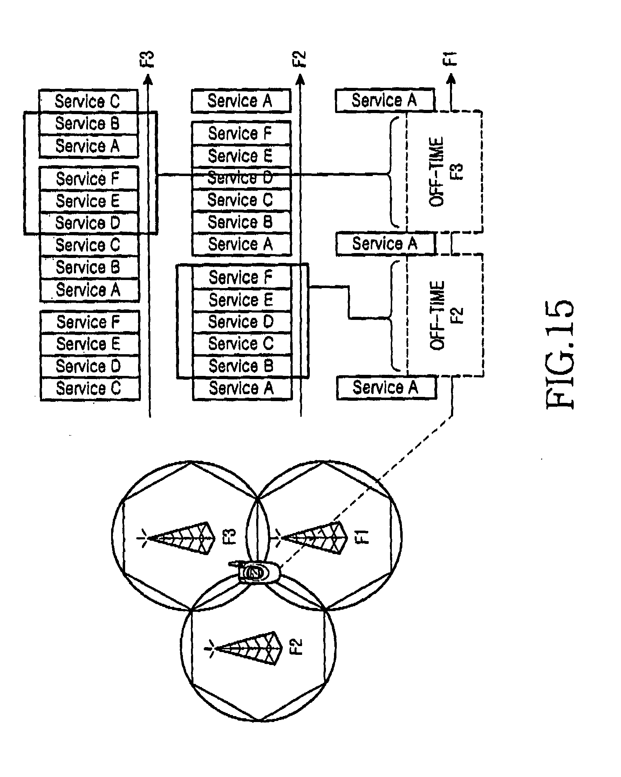

FIG. 15 illustrates handover based on time slicing.

Referring to FIG. 15, as the terminal moves from cell F1 into the handover region between neighboring cells F2 and F3, it searches cells F2 and F3 during off-time until an appropriate service is discovered.

However, the location of a service burst affects a search result in the time slicing scheme. That is, the reception quality of service A decreases in cell F1. While the terminal searches cell F2 during the first off-time, it fails because the location of service A is identical in both cells F1 and F2. Therefore, the terminal must listen to cell F3.

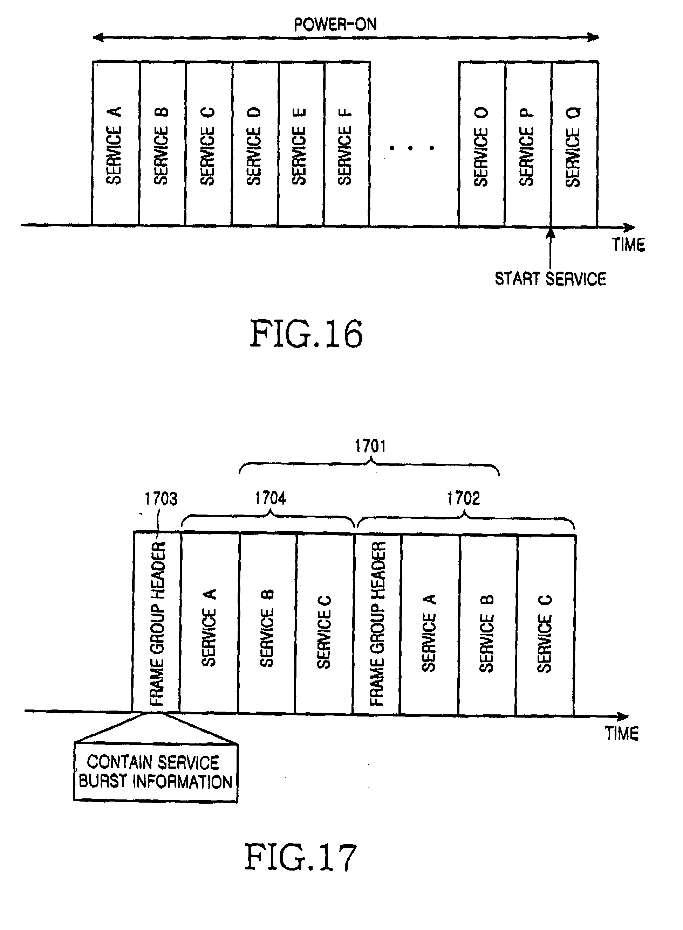

FIG. 16 illustrates expected service reception based on time slicing.

When the user selects one service, the terminal can find the start time of the service referring to an Electronic Service Guide (ESG) or an Electronic Program Guide (EPG) but cannot get an accurate burst time. Therefore, to receive service Q in time slicing, the terminal must search until finding a burst of service Q, as illustrated in FIG. 16.

As described above, the time slicing scheme used in the DVB-H system has drawbacks in power consumption and handover.

## SUMMARY OF THE INVENTION

An object of the present invention is to substantially solve at least the above problems and/or disadvantages and to provide at least the advantages below. Accordingly, the present invention provides an apparatus and method for transmitting and receiving broadcasting data in a digital multimedia broadcasting system, in order to reduce power consumption and provide smooth and seamless handover.

According to one aspect of the present invention, in a method of transmitting broadcasting data in a DMB system, a frame group is constructed, which includes one frame group header and a plurality of signal frames, each signal frame corresponding to a service. The frame group is transmitted in a broadcasting signal. Here, the frame group header includes information about services included in the frame group and information indicating the relative start times of the services.

According to another aspect of the present invention, in a method of receiving broadcasting data in a DMB system, a frame group is received, which includes one frame group header and a plurality of signal frames, each signal frame corresponding to a service. The frame group header includes information about services included in the frame group and information indicating the relative start times of the services. The received frame group is then analyzed.

According to a further aspect of the present invention, in an apparatus for transmitting broadcasting data in a DMB system, a data processor processes transmission data in a predetermined method. A frame generator constructs a frame group with the output of the data processor, which includes one frame group header and information about a plurality of signal frames each corresponding to a service. The frame group header includes information about services included in the frame group and information indicating the relative start times of the services.

According to still another aspect of the present invention, in an apparatus for receiving broadcasting data in a DMB system, a data processor analyzes a frame group including one frame group header and information about a plurality of signal frames each corresponding to a service. The frame group header includes information about services included in the frame group and information indicating the relative start times of the services. A frame slicer controls on and off states of the data processor based on the frame group header.

## BRIEF DESCRIPTION OF THE DRAWINGS

The above and other objects, features and advantages of the present invention will become more apparent from the following detailed description when taken in conjunction with the accompanying drawings in which:

FIG. 1 illustrates the structure of a DVB-T frame;
FIG. 2 illustrates a DVB-H frame for a 4K mode;
FIG. 3 illustrates time slicing;
FIG. 4 is a block diagram of a mobile handheld terminal;
FIG. 5 illustrates MPE section headers each containing $\Delta t$ indicating time to the beginning of the next burst;
FIG. 6 illustrates the $\Delta t$ jitter;
FIG. 7 illustrates burst parameters;
FIG. 8 illustrates a maximum burst duration;
FIG. 9 illustrates formulas to calculate the length of a burst, off-time and achieved saving on power consumption;
FIG. 10 is a graph illustrating how a burst bit rate increasing up to approximately 10 times a constant bit rate increases the achieved power saving;

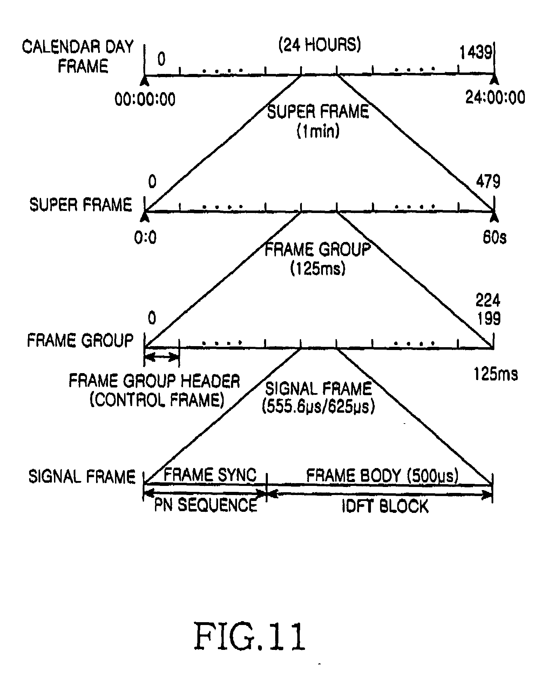

FIG. 11 illustrates a typical DMB-T frame structure;

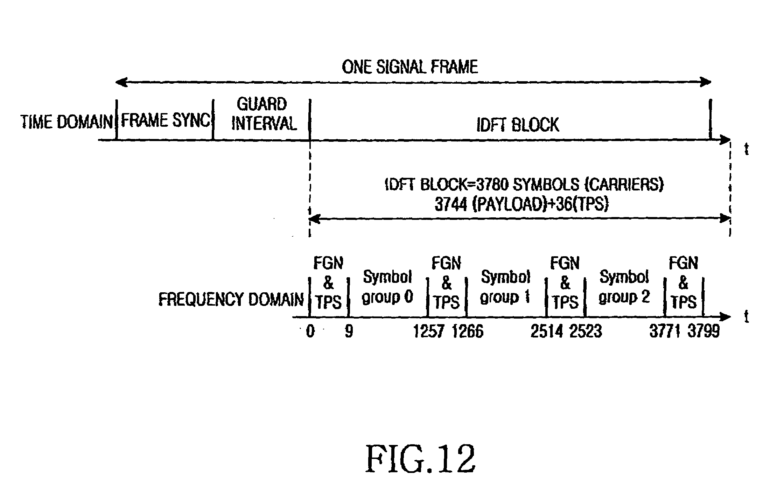

FIG. 12 illustrates the structure of a typical DMB-T signal frame;
FIG. 13 illustrates a conventional service information search by time slicing;
FIG. 14 illustrates a conventional service switching by time slicing;
FIG. 15 illustrates handover by time slicing;
FIG. 16 illustrates expected service reception by time slicing;
FIG. 17 illustrates a frame group using frame slicing according to the present invention;

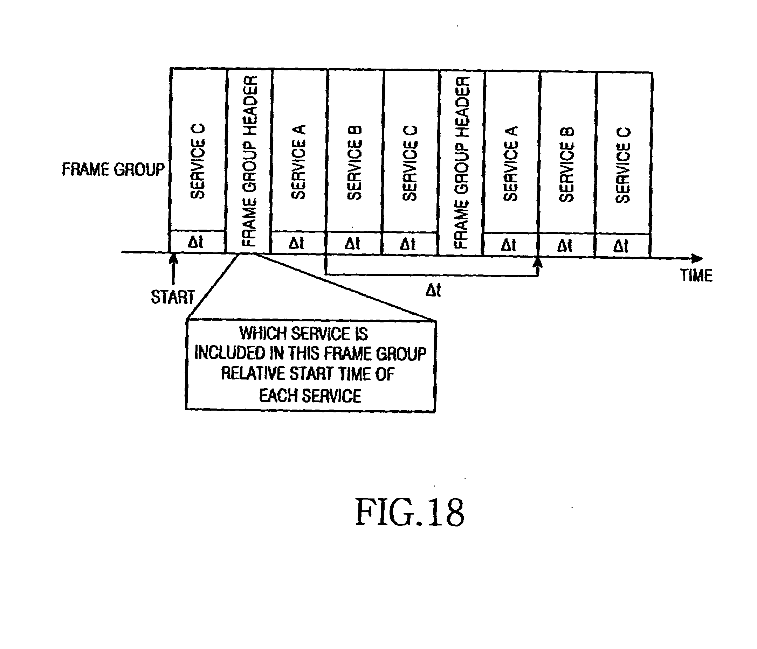

FIG. 18 illustrates frame slicing according to a first embodiment of the present invention;

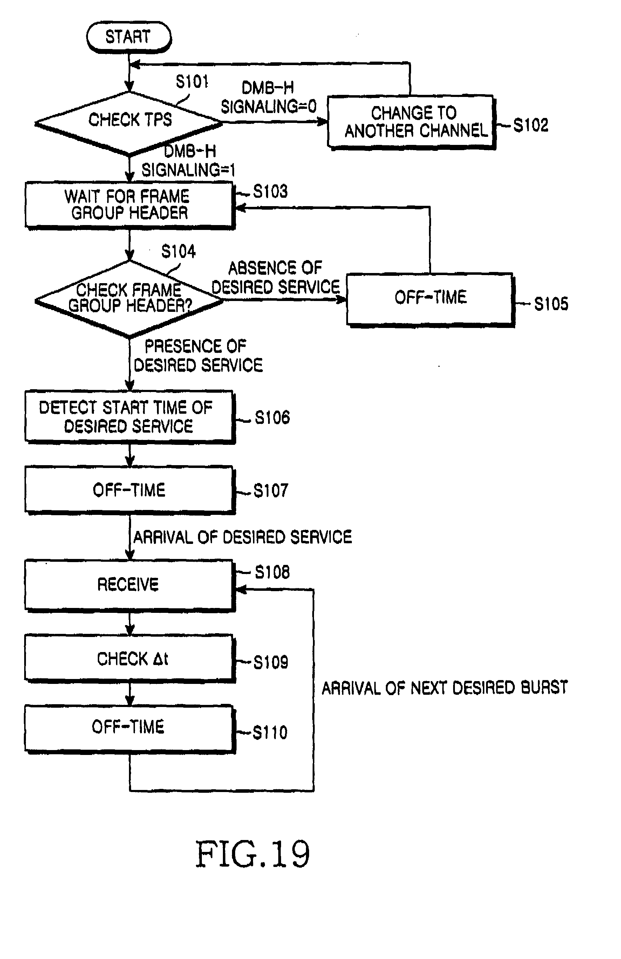

FIG. 19 is a flowchart illustrating an operation for receiving an intended service in a terminal according to the first embodiment of the present invention;

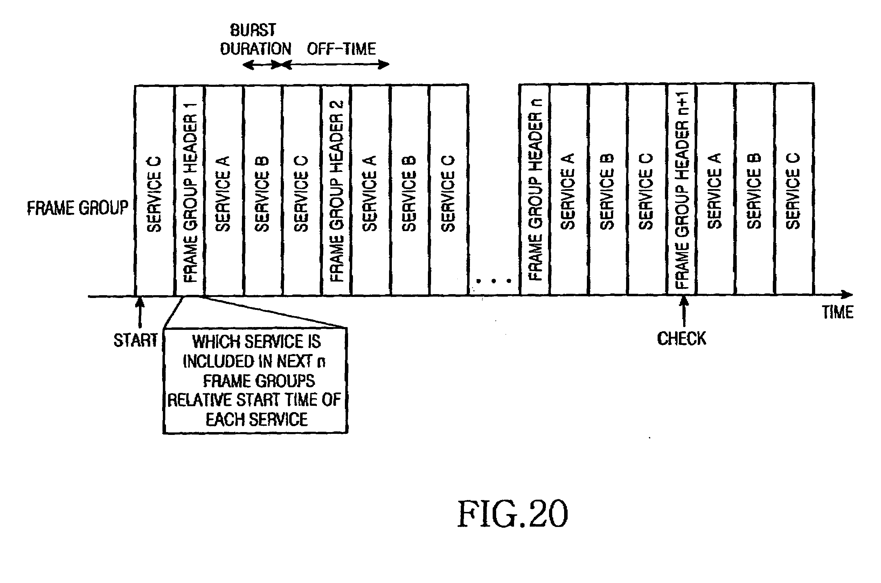

FIG. 20 illustrates frame slicing according to another embodiment of the present invention;

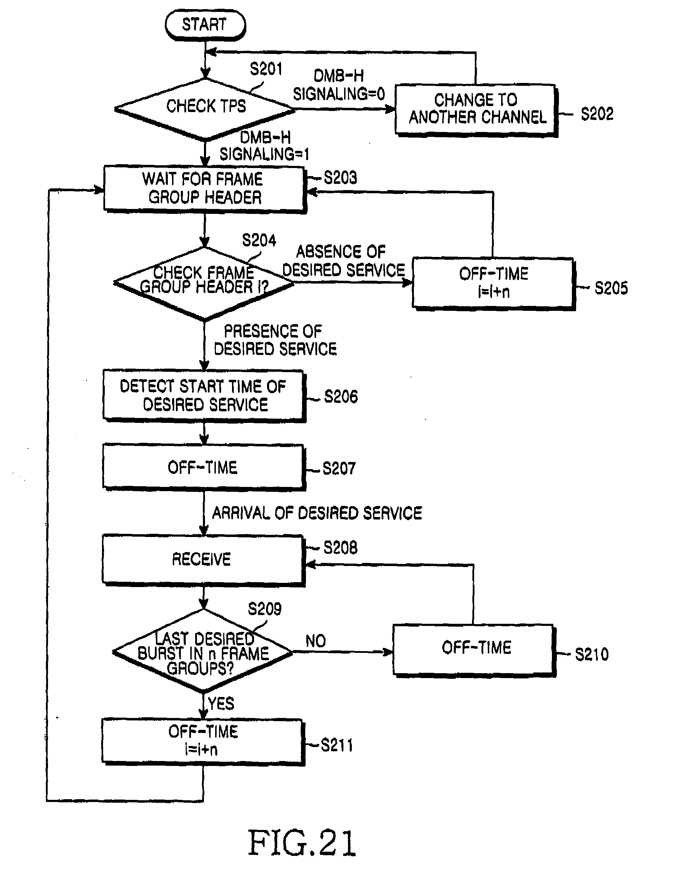

FIG. 21 is a flowchart illustrating an operation for receiving an intended service in the terminal according to the second embodiment of the present invention;

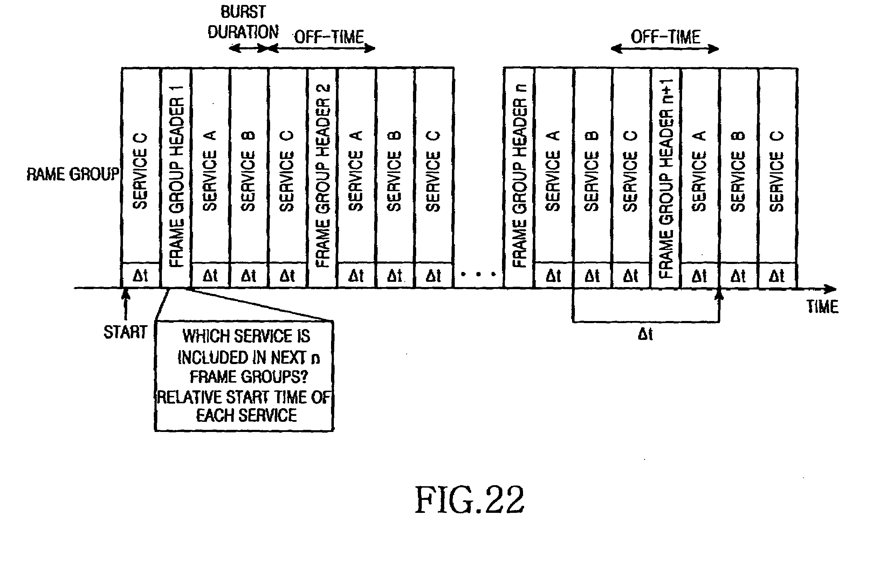

FIG. 22 illustrates frame slicing according to a third embodiment of the present invention;

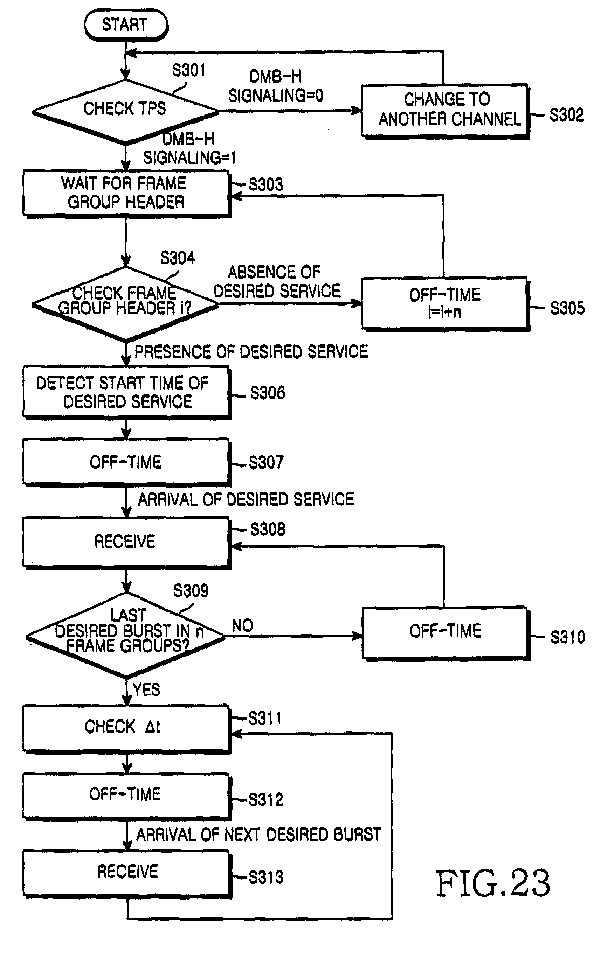

FIG. 23 is a flowchart illustrating an operation for receiving an intended service in the terminal according to the third embodiment of the present invention;

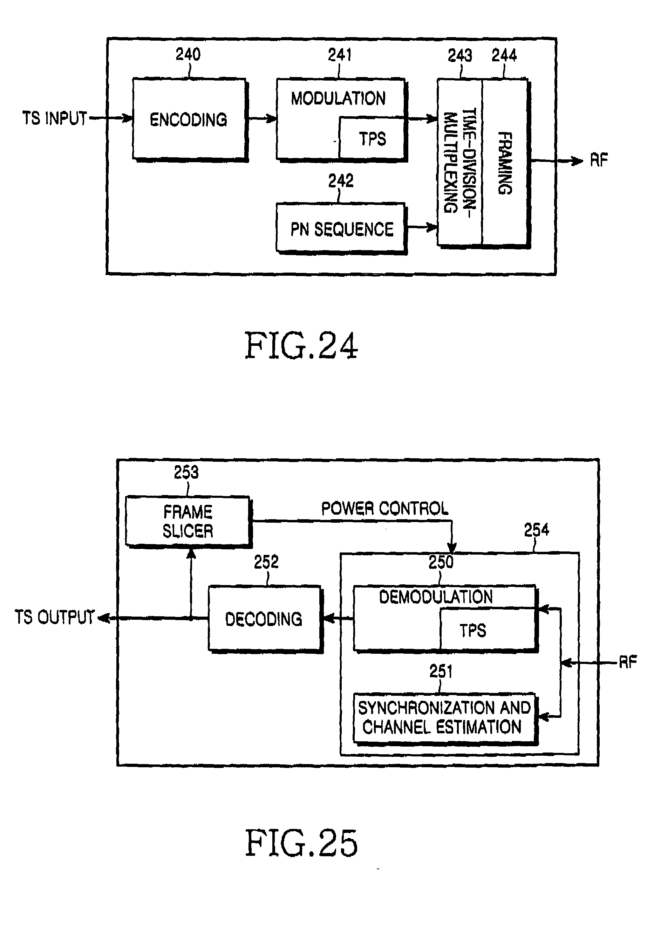

FIG. 24 is a block diagram of a transmitter according to the present invention;
FIG. 25 is a block diagram of a receiver according to the present invention;

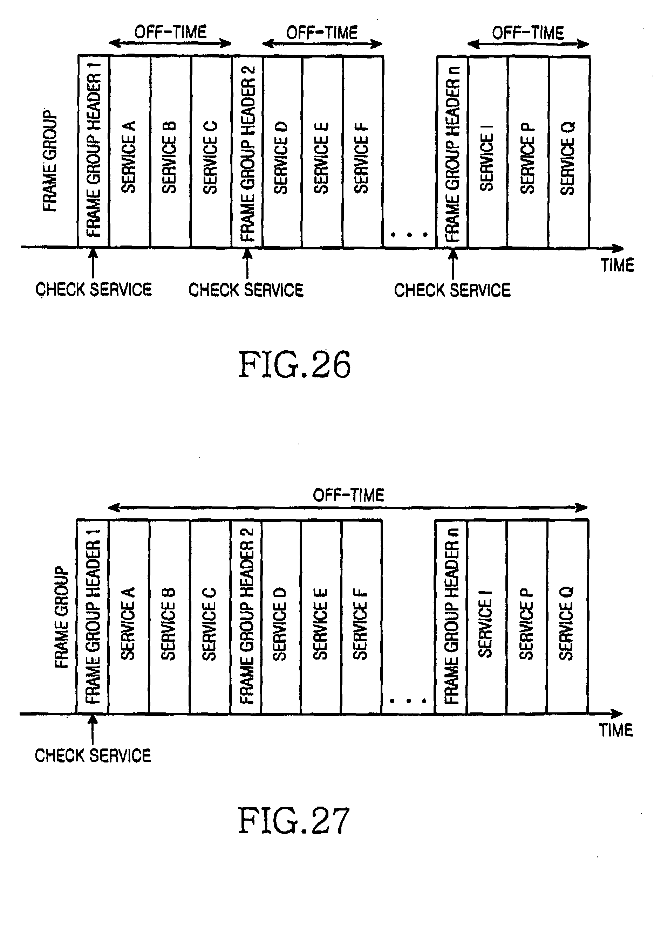

FIG. 26 illustrates a service information search by frame slicing according to the first embodiment of the present invention;
FIG. 27 illustrates a service information search by frame slicing according to the second and third embodiments of the present invention;

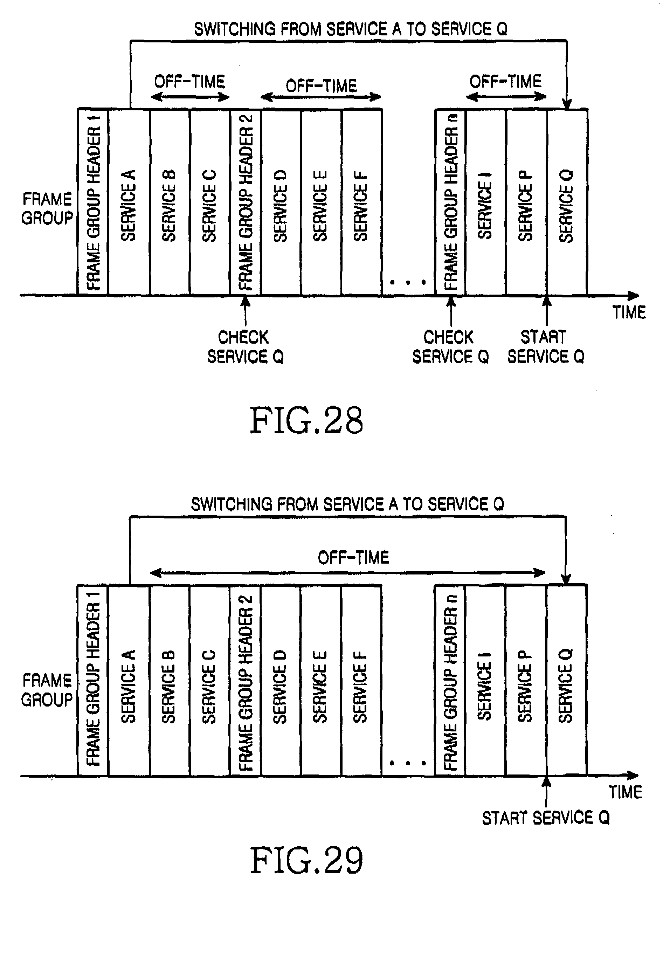

FIG. 28 illustrates an exemplary service switching by frame slicing according to the first embodiment of the present invention;
FIG. 29 illustrates an exemplary service switching by frame slicing according to the second and third embodiments of the present invention, when an intended service is within n frame groups;

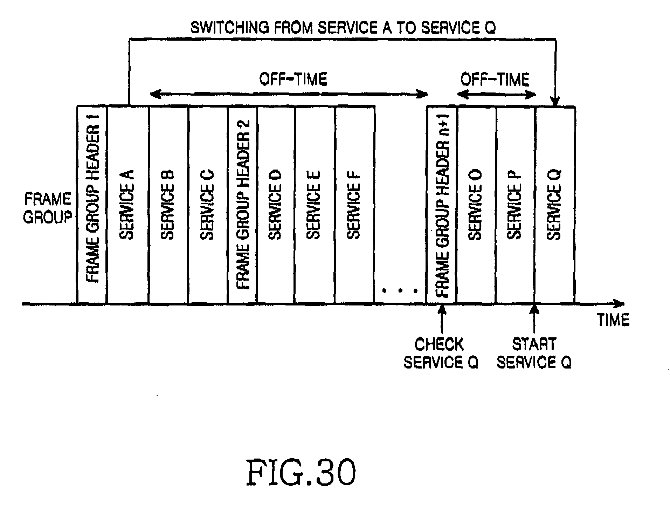

FIG. 30 illustrates an exemplary service switching by frame slicing according to the second and third embodiments of the present invention, when an intended service is not within n frame groups;

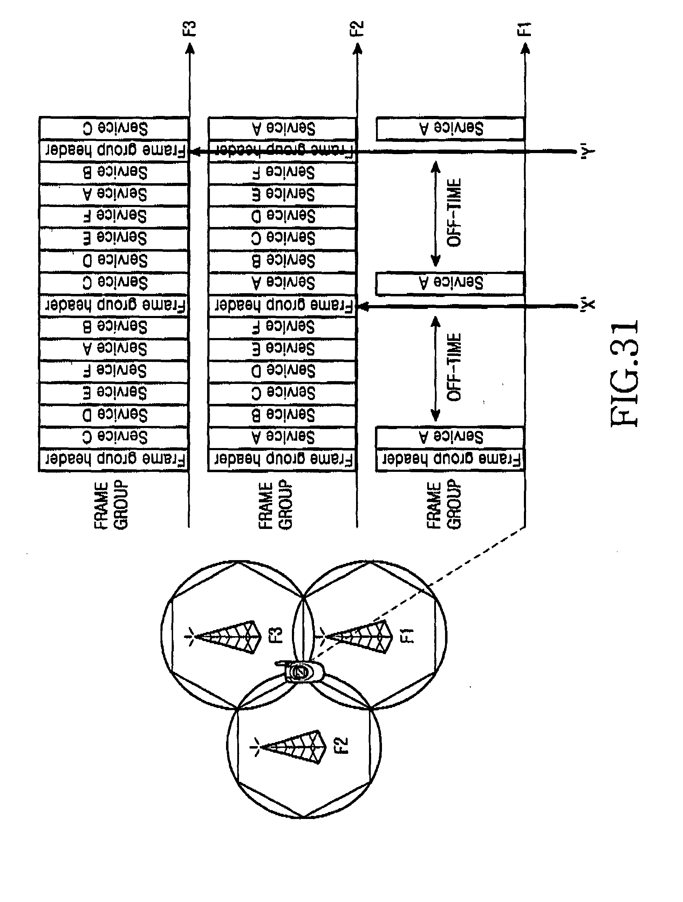

FIG. 31 illustrates handover by synchronization frame slicing according to the present invention;

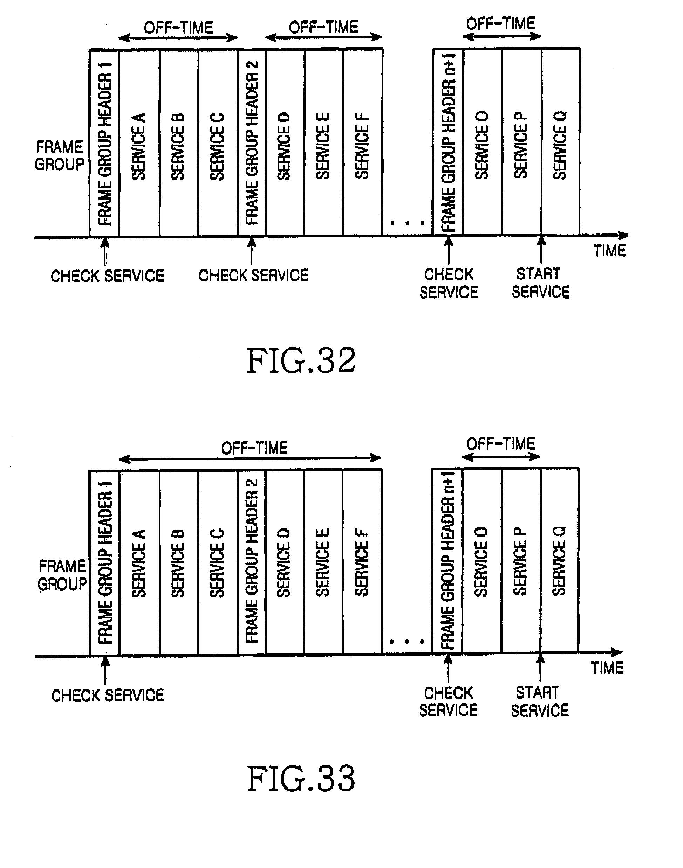

FIG. 32 illustrates an operation for receiving a desired service by frame slicing in the terminal according to the first embodiment of the present invention; and
FIG. 33 illustrates an operation for receiving a desired service by frame slicing in the terminal according to the second and third embodiments of the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides another TDM scheme, frame slicing based on a DMB-T structure. The concept of frame slicing is to not only send data in bursts at a significantly higher rate than a bit rate required if the data was transmitted continuously, but also to use a frame group header to carry information associated with services (i.e. the relative start times of the signal frames of the services). Therefore, power consumption can be reduced and smooth and seamless service handover can be provided.

FIG. 11 illustrates the structure of a typical DMB-T frame.

Referring to FIG. 11, a signal frame includes a frame sync and a frame body. The frame body has in turn a guard interval (not shown) and an Inverse Discrete Fourier Transform (IDFT) block. A Pseudo Noise (PN) sequence included in the frame sync is inserted into the guard interval and the guard interval size is one-fourth or one-ninth the size of the IDFT block. The frame sync is modulated with Binary Phase Shift Keying (BPSK), for robust synchronization.

The duration of a frame group is 125ms, and thus eight frame groups exist in one second. Each signal frame in a frame group has a unique frame number, which is encoded in the frame sync PN sequence. The first signal frame in each frame group is a frame group header used for control. There is an integer MPEG2 TS packet in a frame group.

A super frame is comprised of 480 frame groups, which lasts 60 seconds. Each signal frame in the super frame has a unique super frame number, which is encoded in the frame group.

A calendar day frame includes 1440 super frames and is periodically repeated on a natural day basis. At a selected time, the physical channel frame structure is reset and a new calendar day frame starts.

FIG. 12 illustrates the structure of a typical DMB-T signal frame.

Referring to FIG. 12, in the time domain, the signal frame consists of a frame sync, a guard interval, and an IDFT block. Every IDFT block has 3780 carriers. 3744 of the 3780 carriers are used for payload, and the remaining 36 carriers are divided into four parts. The real part of a complex data symbol is mapped to a frame group number and the imaginary part is mapped to a TPS.

FIG. 17 illustrates a frame group using frame slicing according to the present invention.

In frame slicing according to the present invention, the service burst information of services included in a frame group is carried in its frame group header. Referring to FIG. 17, a frame group header 1703 delivers the service burst information 1704 of service A, service B, and service C included in a frame group 1701 (frame group 1) to a terminal.

Meanwhile, frame slicing indication (i.e. the presence or absence of a frame group header) can be signaled to the terminal by additional signaling. There are 36 TPS bits in every DVB-T signal frame, as illustrated in FIG. 12 and one unused bit of the 36 TPS bits can be used for frame slicing indication.

According to the DMB-T frame structure, three embodiments of frame slicing are provided herein.

Embodiment 1

FIG. 18 illustrates frame slicing according to a first embodiment of the present invention.

Referring to FIG. 18, a frame group includes one frame group header and a plurality of signal frames, each signal frame carrying a broadcast signal from an allocated service. The frame group header contains information identifying services included in this frame group and the relative start time of each service, as illustrated in Table 5. Also, within each service burst of a service, the relative time to the beginning of the next burst of the service ($\Delta t$) is indicated.

Table 5

| Service | Relative start time |
|---------|---------------------|
| A | t1_A |
| B | t1_B |
| C | t1_C |
| ... | ... |

FIG. 19 is a flowchart illustrating an operation for receiving an intended service in a terminal according to the first embodiment of the present invention.

It is noted that while a TPS check is described in detail in the flowchart, the TPS check step may not be provided by user selection.

Referring to FIG. 19, when starting service reception, the terminal checks a TPS bit in step S 101. If the TPS check indicates that DMB-H signaling is 0, the terminal changes to another channel in step S102. If the DMB-H signaling is 1, the terminal awaits reception of a frame group header in step S 103.

Upon receipt of the frame group header, the terminal checks the frame group header in step S104. If there is no desired service in the frame group header, the terminal turns off its receiving circuit in step S 105. Then the terminal awaits reception of the frame group header of a frame group including the desired service in step S103 and again checks a received frame group header in step S104.

On the other hand, in the presence of the desired service in the frame group header in step S104, the terminal detects the relative start time of a signal frame of the desired service in the frame group header in step S106 and stays off until the desired service starts in step S107.

In step S108, the terminal receives the signal frame of the service. The terminal checks $\Delta t$ in step S109, stays off until the next signal frame begins in step S110, and returns to step S108.

During handoff, the terminal searches for frame group headers from other cells during off-time in steps S105, S107 and S110.

If the desired service is changed, the terminal monitors frame group headers until receiving a frame group including the change desired service.

In accordance with the first embodiment of the present invention, the relative start time of each service is indicated in a frame group header, thereby preventing the receiving circuit of the terminal from staying active to receive a signal frame of a desired service.

Embodiment 2

A frame group header carries service burst information about an N frame group, so that there is no need for receiving every frame group header to find a desired service.

FIG. 20 illustrates frame slicing according to another embodiment of the present invention.

Referring to FIG. 20, a frame group includes a frame group header and a plurality of signal frames, each signal frame having a broadcast signal from a service allocated to the signal frame.

In the illustrated case of FIG. 20, the terminal turns on its receiving circuit at a start time and intends to receive service B. The terminal receives frame group header 1 and acquires information about n frame groups from frame group header 1. The terminal then receives a service B burst by staying active only for the transmission period of service B. Thereafter, the terminal stays inactive until frame group header (n+1) arrives. The terminal acquires information about another n frame groups from frame group header (n+1), and then receives the next service B burst by staying active only for the transmission period of service B. In this way, the terminal stays active only for the transmission period of a frame group header after every n frame groups and the transmission periods of the bursts of the desired service, while staying inactive for the remaining periods. In this way, power is saved.

In accordance with the second embodiment of the present invention, the terminal stays inactive until the beginning of a desired service burst, after checking a frame group header. However, if the time to the beginning of the first burst of the service is too short after checking the frame group header, the terminal may stay active.

Compared to the first embodiment of the present invention, no $\Delta t$ information about the next burst is indicated within a burst, and a frame group header carries service information about n frame groups and the relative transmission start time of each service included in the n frame groups. Table 6 illustrates service information included in a frame group header according to the second embodiment of the present invention.

Table 6

| Frame group | Service | Relative start time |
|---|---|---|
| 1 | Frame group header 1 | t1 |
| | A | t1_A |
| | B | t1_B |
| | C | t1_C |
| 2 | Frame group header 2 | t2 |
| | A | t2_A |
| | B | t2_B |
| | C | t2_C |
| ... | ... | ... |

(continued)

| Frame group | Service | Relative start time |
|---|---|---|
| n | Frame group header n | tn |
| | A | tn_A |
| | B | tn B |
| | C | tn_C |

Frame group index n denotes an nth frame group counted from a current frame group.

If the maximum off-time is denoted by $Ot_{max}$, an optimal n value is given as Equation (1):

$$n = \left[ \frac{Ot_{max}}{125ms} \right]$$

$$\ldots \ldots (1)$$

where [x] denotes rounding to positive integer that is the nearest to x. Yet, a trade-off may be needed depending on the area for service information in a frame group header.

FIG. 21 is a flowchart illustrating an operation for receiving an intended service in the terminal according to the second embodiment of the present invention.

While a TPS check is described in detail in the flowchart, the TPS check step may not be provided by user selection.

Referring to FIG. 21, when starting service reception, the terminal performs a TPS check in step S201. If the TPS check indicates that DMB-H signaling is 0, the terminal changes to another channel in step S202. If the DMB-H signaling is 1, the terminal awaits reception of a frame group header in step S203.

Upon receipt of an ith frame group header, the terminal checks the ith frame group header in step S204. If there is no desired service in the ith frame group header, the terminal is kept off until an (i+n)th frame group header arrives in steps S205 and S203. Upon receipt of the (i+n)th frame group header, the terminal again checks the (i+n)th frame group header in step S204.

On the other hand, if the desired service exists in the ith frame group header in step S204, the terminal detects the relative start time of a signal frame of the desired service in the ith frame group header in step S206 and is kept off until the desired service starts in step S207. Upon receipt of the desired service, the terminal receives the signal frame of the service in step S208.

The terminal then determines whether the received signal frame is the last one of the desired service in the n frame groups in step S209. If it is not the last signal frame, the terminal is turned off in step S210 and receives the next signal frame according to the relative start time of the desired service in step S208. On the other hand, in case of the last signal frame, the terminal turns off in step S211 and checks information about the desired service by receiving the (i+n)th frame group header in steps S203 and S204.

In accordance with the second embodiment of the present invention, a frame group header carries the service information of the following N frame groups, which obviates the need for monitoring every frame group header to search for a desired service.

Embodiment 3

Each frame group header includes the service information of the following N frame groups and the relative start time of each service in the N frame groups. In addition, $\Delta t$ is indicated within each burst. Therefore, the terminal can receive a desired service without monitoring a frame group header after every N frame groups.

FIG 22 illustrates frame slicing according to a third embodiment of the present invention.

Referring to FIG. 22, a frame group includes a frame group header and a plurality of signal frames, each signal frame having a broadcast signal from a service allocated to the signal frame. The frame group header carries information identifying the services included in n frame groups and information indicating the relative start time of each service. In addition, the time to the beginning of the next burst, $\Delta t$, is indicated within each signal frame (i.e. each service burst).

In the illustrated case of FIG. 22, the terminal turns on its receiving circuit at a start time and intends to receive service B. The terminal receives frame group header 1 and acquires information about n frame groups from frame group header 1. The terminal then receives a service B burst by staying active only for the transmission period of service B. The terminal checks Δt in the last service B burst during the period of the n frame groups, that is, in the service B within an nth frame group and stays inactive until the beginning of a service B burst in an (n+ 1)th frame group.

In accordance with the third embodiment of the present invention, the terminal stays inactive until the beginning of a burst from a desired service, after checking a frame group header. However, if the time to the beginning of the first burst of the service is too short after checking the frame group header, the terminal may stay active.

FIG. 23 is a flowchart illustrating an operation for receiving an intended service in the terminal according to the third embodiment of the present invention.

While a TPS check is described in detail in the flowchart, the TPS check step may not be provided by user selection.

Referring to FIG. 23, when starting service reception, the terminal performs a TPS check in step S301. If the TPS check indicates that DMB-H signaling is 0, the terminal changes to another channel in step S302. If the DMB-H signaling is 1, the terminal awaits reception of a frame group header in step S303.

Upon receipt of an ith frame group header, the terminal checks the ith frame group header in step S304. If there is no desired service in the ith frame group header, the terminal is kept off until an (i+n)th frame group header arrives in step S305 and again checks the (i+n)th frame group header in steps S303 and S304. On the other hand, if the desired service exists in the ith frame group header in step S304, the terminal detects the relative start time of a signal frame from the desired service in the ith frame group header in step S306 and is kept off until the desired service starts in step S307. Upon receipt of the desired service, the terminal receives the signal frame of the service in step S308.

The terminal then determines whether the received signal frame is the last one of the desired service in the n frame groups in step S309. If it is not the last signal frame, the terminal stays inactive in step S310 and receives the next signal frame of the desired service a predetermined time later in step S308. On the other hand, in case of the last signal frame, the terminal checks Δt in step S311 and stays inactive for Δt in step S312. Then the terminal receives the next burst of the service in step S313.

Then the terminal repeats steps S311, S312 and S313, i.e. Δt check, power-off, and burst reception.

In accordance with the third embodiment of the present invention, a frame group header includes all service information of N frame groups. Therefore, the terminal can easily detect an expected service.

Furthermore, since Δt is included in every burst, the terminal can keep receiving the service without the need for monitoring another frame group header after detecting the service.

In each of the embodiments of the present invention described above, the receiver stays active for a fraction of time, while receiving bursts of a requested service, compared to the conventional technology. If a constant lower bit rate is required by the terminal, this may be provided by buffering the received bursts.

Now a description will be made of the structures of a transmitter and a receiver for use in the DMB-H system in accordance with the first, second and third embodiments of the present invention.

In the DMB-H system, the transmitter encodes and modulates an input TS, time-division-multiplexes the modulated signal with a PN sequence, constructs a frame out of the multiplexed signal by frame slicing according to the present invention, and transmits the frame in the form of an RF signal.

FIG. 24 is a block diagram of a transmitter according to the present invention.

Referring to FIG. 24, the transmitter for use in a DMB-H system includes a data processor for processing transmission data in a predetermined method, and a frame generator 244 for constructing a frame group out of the output of the data processor by frame slicing, and transmitting the frame group.

The data processor includes an encoder 240 for encoding an input signal (TS), a modulator 241 for modulating the coded signal, a PN sequence generator 242 for generating a PN sequence, and a time-division-multiplexer 243 for time-division-multiplexing the modulated signal with the PN sequence.

The frame generator 244 constructs a frame formatted in accordance with the first, second or third embodiment of the present invention from the time-division-multiplexed signal. An RF end (not shown) upconverts the frame signal to an RF signal and transmits the RF signal.

The encoder 240 performs FEC, outer coding, outer interleaving, inner coding, and inner interleaving, and the modulator 241 provides constellation, TPS insertion, and OFDM functionality.

The PN sequence generator 242 generates a time-domain PN sequence to be inserted into an OFDM guard interval, for synchronization and channel estimation. The time-division-multiplexer 243 combines an IDFT block with the PN sequence.

FIG. 25 is a block diagram of a receiver according to the present invention.

Referring to FIG. 25, the receiver for use in the DMB-H system includes a data processor for analyzing a frame group constructed in the first, second or third embodiment of the present invention and implementing a desired service, and a frame slicer 253 for controlling the on/off states of the data processor based on the information of a frame group header.

The data processor is comprised of a receiving circuit 254 and a decoder 252. The receiving circuit 254 in turn has an RF end (not shown) for downconverting a received RF signal to a baseband signal, a demodulator 250 for demodulating the baseband signal, and a synchronizer and channel estimator 251 for performing synchronization and channel estimation using a PN sequence of the baseband signal. The decoder 252 decodes the output of the demodulator 250.

The frame slicer 253 performs frame slicing using the decoded signal. The frame is analyzed by the frame slicer 253, and the power of the demodulator 250 and the synchronizer & channel estimator 251 is controlled according to the analysis result.

Table 7 illustrates parameters used in the DMB-H system.

Table 7

| Coding | Forward f Code(FFC) | Concatenated channel coding |
|---|---|---|
| | Outer coding | RS (208, 188) |
| | Outer interleaving | B=52, M=4 |
| | Inner coding | R=2/3, RSC (64QAM) R=4/9, RCRSC (QPSK) R=8/9, RSC |
| | Inner interleaving | Time interleaving (0, 0), (52, 48), (52, 120), (52, 240) |
| Modulation | Constellation Uniform Non-uniform | QPSK, 16QAM and 64QAM 64QAM |
| | TPS | 36 TPS carriers are divided into four groups QPSK modulation |
| | OFDM | |
| PN sequence | Time-domain PN sequence inserted into OFDM guard interval is used for synchronization and channel estimation BPSK modulation | |

How service information is found according to the first, second and third embodiments of the present invention will be described below in detail with reference to FIGs. 26 and 27.

FIG. 26 illustrates a service information search by frame slicing according to the first embodiment of the present invention.

In the first embodiment of the present invention, a frame group header provides information identifying the services included in a frame group and information indicating the relative start time of each service. Therefore, the terminal does not need to monitor the total signal frames to acquire such information. That is, the terminal has only to monitor the frame group header of each frame group, as illustrated in FIG. 26.

FIG. 27 illustrates a service information search by frame slicing according to the second and third embodiments of the present invention.

In the second and third embodiments of the present invention, a frame group header includes information identifying the services included in n frame groups and information indicating the relative start time of each service. Therefore, the terminal does not need to monitor the total signal frames to acquire such information. That is, the terminal has only to monitor a frame group header after every n frame groups, as illustrated in FIG. 27. In this way, a service search time is further reduced, compared to the first embodiment, because there is no need for monitoring every frame group header.

Service switching methods will be described below in detail with reference to FIGs. 28, 29 and 30.

FIG. 28 illustrates an exemplary service switching by frame slicing according to the first embodiment of the present invention, FIG. 29 illustrates an exemplary service switching by frame slicing according to the second and third embodiments of the present invention, when an intended service is within n frame groups, and FIG. 30 illustrates an exemplary service switching based on frame slicing according to the second and third embodiments of the present invention, when an intended service is not within n frame groups.

As illustrated in FIG. 14, the terminal must stay active until detecting a desired service in the conventional time slicing scheme.

However, the terminal monitors frame group headers until detecting a desired service when switching from service A to service Q in the first embodiment of the present invention, as illustrated in FIG. 28.

Referring to FIG. 29, if the terminal already acquires information about service Q from a received frame group header, it can be kept off until service Q starts in the second and third embodiments of the present invention.

On the other hand, if the terminal fails to acquire the information of service Q from the received frame group header, it monitors the frame group header of every (nxi+1)$^{th}$ (i=1, 2, ..., N) frame group, as illustrated in FIG. 30.

Now a detailed description will be made of handover according to the first, second and third embodiments of the present invention.

While the terminal needs to listen until detecting an appropriate service in conventional time slicing, it only monitors frame group headers from neighboring cells in the frame slicing scheme according to the embodiments of the present invention.

Compared to the time slicing scheme in which the position of a service burst affects a search result, the frame slicing scheme can solve this problem. If a neighbor cell includes an intended service, the terminal can find a service during one cycle by monitoring the frame group header irrespective of the position of the service.

FIG. 31 illustrates handover by synchronization frame slicing according to the embodiments of the present invention.

According to the conventional technology, referring to FIG. 15, the reception quality of service A is reduced in cell F1. Although the terminal listens to cell F2 during the first off-time, it fails to detect service A because service A is at the same position in both cells F1 and F2. Hence, the terminal switches to cell F3.

In the embodiments of the present invention, however, even at the same position in cells F 1 and F2, service A can be found by first monitoring a frame group header from cell F2, as illustrated in FIG. 31.

Reference character X denotes time required for monitoring the frame group header of cell F2, and reference character Y denotes time required for monitoring the frame group header of cell F3.

With reference to FIGs. 32 and 33, how the terminal can receive a service in accordance with the first, second and third embodiments of the present invention will now be described in detail.

FIG. 32 illustrates an operation for receiving a desired service by frame slicing in the terminal according to the first embodiment of the present invention, and FIG. 33 illustrates an operation for receiving a desired service by frame slicing in the terminal according to the second and third embodiments of the present invention.

When the user selects a service, the terminal detects the relative start time of the selected service by referring to an ESG or EPG, but does not know an accurate burst time. Therefore, the terminal must scan until detecting the first service burst in the conventional time slicing scheme, as illustrated in FIG. 16. In contrast, the terminal can receive a desired service (service Q) by monitoring frame group headers by frame slicing in accordance with the first embodiment of the present invention, as illustrated in FIG. 32. Particularly in the second and third embodiments, the terminal can receive service Q on time by monitoring a frame group header after every n frame groups, as illustrated in FIG. 33.

The frame slicing according to these embodiments is more efficient than the conventional time slicing in various respects including power consumption, service switching, handover, and reception of a desired service.

As described above, the frame slicing of the present invention is based on a DVB-T frame structure. Since service information is carried by a frame group header, power consumption is more effectively reduced and smooth and seamless service handover can be implemented.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method of transmitting broadcasting data in a digital multimedia broadcasting (DMB) system, comprising the steps of:

   constructing a frame group including one frame group header and a plurality of signal frames, each signal frame corresponding to a service; and
   transmitting the frame group in a broadcasting signal,

   wherein the frame group header includes information about services included in the frame group and information indicating relative start times of each service.

2. The method of claim 1, wherein each of the signal frames includes a transmission parameter signaling (TPS) bit indicating presence or absence of the frame group header.

3. The method of claim 1, wherein the frame group constructing step comprises including in each of the signal frames time to the beginning of a next signal frame of the service corresponding to the each signal frame.

4. The method of claim 1, wherein the frame group constructing step comprises the step of including in the frame group header information about services included in next N frame groups and information indicating the relative start times of the services, where N is a natural number.

5. The method of claim 1, wherein the frame group constructing step comprises including in the frame group header information about services included in next N frame groups and information indicating the relative start times of the services, and including in each of the signal frames time to the beginning of the next signal frame of the service corresponding to the each signal frame, where N is the natural number.

6. A method of receiving broadcasting data in a digital multimedia broadcasting (DMB) system, comprising the steps of:

receiving a frame group including a frame group header and a plurality of signal frames, each signal frame corresponding to a service and the frame group header including information about services included in the frame group and information indicating relative start times of the services; and
analyzing the received frame group.

7. The method of claim 6, wherein the frame group includes in each of the signal frames a relative time to the beginning of a next signal frame of the service corresponding to each signal frame.

8. The method of claim 7, wherein the frame group analyzing step comprises :

monitoring the frame group header and, in the presence of a desired service in the frame group, detecting the relative start time of the desired service; and
receiving a signal frame of the desired service based on the service information and the relative start time.

9. The method of claim 8, further comprising maintaining a receiving circuit in an off state until the signal frame of the desired service is received, after detecting the relative transmission start time of the desired service.

10. The method of claim 8, further comprising monitoring the frame group header of a next frame group in the absence of the desired service in the frame group.

11. The method of claim 8, wherein the signal frame receiving step comprises repeating detection of the time to the beginning of the next signal frame of the desired service, maintaining a receiving circuit in an off state, and receiving of the signal frame of the desired service according to the relative start time of the desired service.

12. The method of claim 6, wherein the frame group includes information about services included in next N frame groups and relative transmission start times of the services in the frame group header, where N is a natural number.

13. The method of claim 12, wherein the frame group analyzing step comprises :

monitoring the frame group header and, in the presence of a desired service in the frame group, detecting the relative start time of the desired service; and
receiving a signal frame of the desired service according to the relative transmission start time.

14. The method of claim 12, further comprising maintaining the receiving circuit in an off state until the signal frame of the desired service is received, after detecting the relative start time of the desired service.

15. The method of claim 12, further comprising monitoring the frame group header of an $(N+1)^{th}$ frame group counted from the frame group in the absence of the desired service in the frame group.

16. The method of claim 12, further comprising :

determining, after receiving the signal frame, whether the signal frame is the last signal frame of the desired service in the N frame groups; and
detecting the relative start time of the desired service, if the signal frame is the last signal frame, and monitoring the frame group header of the $(N+1)^{th}$ frame group.

17. The method of claim 16, further comprising , if the signal frame is not the last signal frame, maintaining the receiving circuit in an off state and receiving a next signal frame of the desired service according to the relative start time of the desired service.

18. The method of claim 6, wherein the frame group includes a relative time to the beginning of a next signal frame of the service corresponding to the each signal frame , and includes information about services included in next N frame groups and information indicating the relative transmission start time of each of the services in the frame group header, where N is a natural number.

19. The method of claim 18, wherein the frame group analyzing step comprises :

monitoring the frame group header and, in the presence of a desired service in the frame group, detecting the relative start time of the desired service from the frame group header; and
receiving a signal frame corresponding to the desired service based on the relative start time.

20. The method of claim 18, further comprising maintaining the receiving circuit in an off state until the signal frame of the desired service is received, after detecting the relative start time of the desired service.

21. The method of claim 18, further comprising monitoring the frame group header of an $(N+1)^{th}$ frame group counted from the frame group, in the absence of the desired service in the frame group.

22. The method of claim 18, further comprising :

determining, after receiving the signal frame, whether the signal frame is the last signal frame of the desired service in the N frame groups; and
detecting, if the signal frame is the last signal frame, the relative time to the beginning of a next signal frame of the desired service, monitoring the frame group header of the $(N+1)^{th}$ frame group, maintaining the receiving circuit in an off state, and receiving the next signal frame of the desired service according to the relative time to the beginning of the next signal frame.

23. The method of claim 22, further comprising , if the signal frame is not the last signal frame, maintaining the receiving circuit in an off state, and receiving a next signal frame of the desired service:

24. The method of claim 6, wherein each of the signal frames includes a transmission parameter signaling (TPS) bit indicating the presence or absence of the frame group header, and the frame group analyzing step comprises analyzing the received frame group according to the TPS bit.

25. An apparatus for transmitting broadcasting data in a digital multimedia broadcasting (DMB) system, comprising:

a data processor for processing transmission data according to a predetermined method; and
a frame generator for constructing a frame group using an output of the data processor, the frame group including a frame group header and information about a plurality of signal frames each corresponding to a service, and the frame group header including information about services included in the frame group and information indicating relative start times of the services.

26. The apparatus of claim 25, wherein the data processor comprises:

an encoder for encoding an input signal;
a modulator for modulating the coded signal;
a pseudo noise (PN) sequence generator for generating a PN sequence; and
a time-division-multiplexer for time-division-multiplexing the modulated signal with the PN sequence.

27. The apparatus of claim 25, wherein the frame generator constructs the frame group so that each of the signal frames includes information indicating time to the beginning of a next signal frame of a service corresponding to each signal frame.

28. The apparatus of claim 25, wherein the frame generator constructs the frame group so that the frame group header includes information about services included in next N frame groups and information indicating the relative start times of the services, where N is a natural number.

**29.** The apparatus of claim 25, wherein the frame generator constructs the frame group so that the frame group header includes information about services included in next N frame groups and information indicating the relative start times of the services, and the each signal frame includes information indicating time to the beginning of a next signal frame of the service corresponding to each signal frame, where N is a natural number.

**30.** An apparatus for receiving broadcasting data in a digital multimedia (DMB) system, comprising:

a data processor for analyzing a frame group including a frame group header and information about a plurality of signal frames each corresponding to a service, and the frame group header including information about services included in the frame group and information indicating relative start times of the services; and
a frame slicer for controlling on and off states of the data processor based on the frame group header.

**31.** The apparatus of claim 30, wherein the data processor comprises:

a demodulator for demodulating and analyzing an input signal;
a synchronizer and channel estimator for performing synchronization and channel estimation using a pseudo noise (PN) sequence of the input signal; and
a decoder for decoding the demodulated signal.

**32.** The apparatus of claim 30, wherein the frame group includes information indicating a relative time to the beginning of a next signal frame of a service corresponding to each signal frame .

**33.** The apparatus of claim 30, wherein the frame group includes information about services included in next N frame groups and relative transmission start times of the services in the frame group header, where N is a natural number.

**34.** The apparatus of claim 30, wherein the frame group includes a relative time to the beginning of a next signal frame of the service corresponding to each signal frame , and includes information about services included in next N frame groups and information indicating relative transmission start time of each of the services in the frame group header, where N is a natural number.

**35.** The apparatus of claim 30, wherein each signal frame includes a transmission parameter signaling (TPS) bit indicating the presence or absence of the frame group header.

FIG.1

FIG.2

SERVICE A | SERVICE B | SERVICE C | SERVICE D | SERVICE E | SERVICE A | SERVICE B | SERVICE C | SERVICE D | SERVICE E

t

# FIG.3

| 410 | 420 | 430 | 440 |
|---|---|---|---|
| BATTERY | ANTENNA | RECEIVER (DVB-T) | TIMING AND SYNCHRONIZATION |
| | 450 | 460 | 470 |
| | MEMORY | PROCESSOR/ MICROCONTROLLER | USER INTERFACE AND DISPLAY |

# FIG.4

Δt

SECTIONS

FIG.5

Δt   Δt JITTER

FIG.6

BURST
DURATION      OFF-TIME

BURST SIZE

BURST BIT RATE

CONSTANT
BIT RATE

## FIG.7

$T_1$ MAX BURST $T_2$
$\Delta t$      DURATION

## FIG.8

Bd  BURST DURATION (SECONDS)

$$Bd = \frac{Bs}{Bb * 0.96}$$

Bs  BURST SIZE (BITS)

Bb  BURST BIT RATE (BITS PER SECOND)

Cb  CONSTANT BIT RATE (BITS PER SECOND)

Ot  OFF-TIME (SECONDS)

$$Ot = \frac{Bs}{Cb * 0.96} - Bd$$

St  SYNCHRONIZATION (SECONDS)

Ps  POWER SAVING (PERCENT)

$$Ps = (1 - \frac{(Bd + St + (3/4*Dj))*Cb*0.96}{Bs}) * 100\%$$

Dj  Δt JITTER (SECONDS)

# FIG.9

FIG.10

24

CALENDAR DAY FRAME | 0 ... (24 HOURS) ... 1439 | 00:00:00 ... 24:00:00

SUPER FRAME (1min)

SUPER FRAME | 0 ... 479 | 0:0 ... 60s

FRAME GROUP (125ms)

FRAME GROUP | 0 ... 224/199 | FRAME GROUP HEADER (CONTROL FRAME) ... 125ms

SIGNAL FRAME (555.6μs/625μs)

SIGNAL FRAME | FRAME SYNC | FRAME BODY (500μs) | PN SEQUENCE | IDFT BLOCK

FIG.11

25

ONE SIGNAL FRAME

TIME DOMAIN | FRAME SYNC | GUARD INTERVAL | IDFT BLOCK

t

IDFT BLOCK=3780 SYMBOLS (CARRIERS)
3744 (PAYLOAD)+36(TPS)

FREQUENCY DOMAIN | FGN & TPS | Symbol group 0 | FGN & TPS | Symbol group 1 | FGN & TPS | Symbol group 2 | FGN & TPS

t

0   9          1257 1266        2514 2523        3771 3799

FIG.12

POWER-ON

SERVICE A  SERVICE B  SERVICE C  SERVICE D  SERVICE E  SERVICE F  . . .  SERVICE O  SERVICE P  SERVICE Q

TIME

FIG.13

POWER-ON

SWITCH FROM SERVICE A TO SERVICE Q

SERVICE A  SERVICE B  SERVICE C  SERVICE D  SERVICE E  SERVICE F  . . .  SERVICE O  SERVICE P  SERVICE Q

TIME

FIND SERVICE Q

START SERVICE Q

FIG.14

Service C
Service B
Service A
Service F
Service E
Service D
Service C
Service B
Service A
Service F
Service E
Service D
Service C

Service A
Service F
Service E
Service D
Service C
Service B
Service A
Service F
Service E
Service D
Service C
Service B
Service A

Service A
Service A
Service A

F3
F2
F1

OFF-TIME F3
OFF-TIME F2

F3
F1
F2

FIG.15

POWER-ON

SERVICE A | SERVICE B | SERVICE C | SERVICE D | SERVICE E | SERVICE F ... SERVICE O | SERVICE P | SERVICE Q

TIME

START SERVICE

## FIG.16

1701

1703  1704  1702

FRAME GROUP HEADER | SERVICE A | SERVICE B | SERVICE C | FRAME GROUP HEADER | SERVICE A | SERVICE B | SERVICE C

TIME

CONTAIN SERVICE BURST INFORMATION

## FIG.17

29

FIG.18

FRAME GROUP

START

SERVICE C | Δt
FRAME GROUP HEADER
SERVICE A | Δt
SERVICE B | Δt
SERVICE C | Δt
FRAME GROUP HEADER
SERVICE A | Δt
SERVICE B | Δt
SERVICE C | Δt

Δt

TIME

WHICH SERVICE IS
INCLUDED IN THIS FRAME GROUP
RELATIVE START TIME OF
EACH SERVICE

30

FIG.19

EP 1 717 974 A2

BURST
DURATION    OFF-TIME

FRAME GROUP

SERVICE C | FRAME GROUP HEADER 1 | SERVICE A | SERVICE B | SERVICE C | FRAME GROUP HEADER 2 | SERVICE A | SERVICE B | SERVICE C | FRAME GROUP HEADER n | SERVICE A | SERVICE B | SERVICE C | FRAME GROUP HEADER n+1 | SERVICE A | SERVICE B | SERVICE C

START

CHECK

TIME

WHICH SERVICE IS
INCLUDED IN NEXT n
FRAME GROUPS
RELATIVE START TIME OF
EACH SERVICE

FIG.20

START

S201
CHECK TPS → DMB-H SIGNALING=0 → CHANGE TO ANOTHER CHANNEL — S202

DMB-H SIGNALING=1

WAIT FOR FRAME GROUP HEADER — S203

S204
CHECK FRAME GROUP HEADER i? → ABSENCE OF DESIRED SERVICE → OFF-TIME i=i+n — S205

PRESENCE OF DESIRED SERVICE

DETECT START TIME OF DESIRED SERVICE — S206

OFF-TIME — S207

ARRIVAL OF DESIRED SERVICE

RECEIVE — S208

S209
LAST DESIRED BURST IN n FRAME GROUPS? → NO → OFF-TIME — S210

YES

OFF-TIME i=i+n — S211

FIG.21

FIG.22

START

S301

CHECK TPS

DMB-H
SIGNALING=0 → CHANGE TO
ANOTHER CHANNEL — S302

DMB-H
SIGNALING=1

WAIT FOR FRAME
GROUP HEADER — S303

S304

CHECK FRAME
GROUP HEADER i?

ABSENCE OF
DESIRED SERVICE → OFF-TIME
i=i+n — S305

PRESENCE OF DESIRED SERVICE

DETECT START TIME OF
DESIRED SERVICE — S306

OFF-TIME — S307

ARRIVAL OF DESIRED SERVICE

RECEIVE — S308

S309

LAST
DESIRED BURST IN n
FRAME GROUPS?

NO → OFF-TIME — S310

YES

CHECK Δt — S311

OFF-TIME — S312

ARRIVAL OF NEXT DESIRED BURST

RECEIVE — S313

FIG.23

FIG.24

FIG.25

FIG.26

FIG.27

SWITCHING FROM SERVICE A TO SERVICE Q

OFF-TIME     OFF-TIME     OFF-TIME

FRAME GROUP | FRAME GROUP HEADER 1 | SERVICE A | SERVICE B | SERVICE C | FRAME GROUP HEADER 2 | SERVICE D | SERVICE E | SERVICE F | . . . | FRAME GROUP HEADER n | SERVICE I | SERVICE P | SERVICE Q

TIME

CHECK SERVICE Q     CHECK SERVICE Q     START SERVICE Q

# FIG.28

SWITCHING FROM SERVICE A TO SERVICE Q

OFF-TIME

FRAME GROUP | FRAME GROUP HEADER 1 | SERVICE A | SERVICE B | SERVICE C | FRAME GROUP HEADER 2 | SERVICE D | SERVICE E | SERVICE F | . . . | FRAME GROUP HEADER n | SERVICE I | SERVICE P | SERVICE Q

TIME

START SERVICE Q

# FIG.29

FIG.30

EP 1 717 974 A2

# FIG.31

**FRAME GROUP** — F1

| Frame group header |
|---|
| Service A |

OFF-TIME

| Service A |

OFF-TIME

| Service A |

**FRAME GROUP** — F2

| Frame group header |
|---|
| Service F |
| Service A |
| Service B |
| Service C |
| Service D |
| Service E |

| Frame group header |
|---|
| Service A |
| Service B |
| Service C |
| Service D |
| Service E |
| Service F |

**FRAME GROUP** — F3

| Frame group header |
|---|
| Service B |
| Service A |
| Service F |
| Service E |
| Service D |
| Service C |

| Frame group header |
|---|
| Service C |
| Service D |
| Service E |
| Service F |
| Service A |
| Service B |

'X'

'Y'

40

FIG.32

FIG.33